# EUROPÄISCHE PATENTSCHRIFT

(11) **EP 2 180 305 B1**
(45) Veröffentlichungstag und Bekanntmachung des Hinweises auf die Patenterteilung: **01.05.2013**
(21) Anmeldenummer: 09013466.9
(22) Anmeldetag: 26.10.2009
(51) Int. Cl.: G01M 17/007, G01S 7/497, G06T 7/00

(54) **Verfahren zur Erprobung und/oder Funktionsprüfung wenigstens eines in einem Kraftfahrzeug verbauten Umfeldsensors sowie zugehörige Anordnung**
Method for testing and/or testing the function of at least one environment sensor installed in a motor vehicle and corresponding device
Procédé de test et/ou de vérification du fonctionnement d'au moins un capteur d'environnement intégré dans un véhicule automobile, ainsi qu'agencement correspondant

(30) Priorität: 27.10.2008 DE 102008053390
(43) Veröffentlichungstag der Anmeldung: 28.04.2010
(73) Patentinhaber: Audi AG, 85045 Ingolstadt (DE); Volkswagen Aktiengesellschaft, 38440 Wolfsburg (DE); Audi Electronics Venture GmbH, 85080 Gaimersheim (DE)
(72) Erfinder: Riedel, Helmut, 86697 Oberhausen (DE); Theinert, Bernd, 92339 Beilngries (DE); Stoll, Johann, 85123 Karlskron (DE); Altendorfer, Richard, Dr., 56070 Koblenz (DE); Holze, Raimond, 38446 Wolfsburg (DE); Pfaller, Michael Franz, 92339 Beilngries-Irfersdorf (DE)
(74) Vertreter: Geissler, Manfred

(56) Entgegenhaltungen:
- EP-A1- 1 376 051
- EP-A2- 1 818 748
- WO-A1-02/01177
- DE-A1- 10 037 219
- DE-A1- 10 246 066
- DE-A1- 10 309 934

## Beschreibung

Die Erfindung betrifft ein Verfahren zur Erprobung und/oder Funktionsprüfung wenigstens eines in einem Kraftfahrzeug verbauten Umfeldsensors, bei dem Messdaten betreffend wenigstens einen bezüglich des Kraftfahrzeugs definiert positionierten und ausgerichteten Prüfkörper aufgenommen werden, wobei zur definierten Positionierung und Ausrichtung des Kraftfahrzeugs relativ zu dem feststehenden Prüfkörper das Kraftfahrzeug in eine definierte Position verbracht und die Kraftfahrzeugachse definiert ausgerichtet wird. Daneben betrifft die Erfindung eine Anordnung zur Erprobung und/oder Funktionsprüfung wenigstens eines in einem Kraftfahrzeug verbauten Umfeldsensors.

Im Rahmen der Erprobung neuer Umfeldsensorik oder der Funktionsprüfung bei der Endfertigung von Kraftfahrzeugen, kurz, zum Testen der aus wenigstens einem Umfeldsensor bestehenden Umfeldsensorik eines Kraftfahrzeugs, ist es notwendig, Umfeldsensorik beispielsweise von Fahrerassistenzsystemen und die Systemperformance über das gesamte Sichtfeld der einzelnen Umfeldsensoren zu charakterisieren. Dazu werden unterschiedlich geartete Prüfkörper innerhalb des Sensorsichtfeldes in unterschiedlicher Entfernung und unter unterschiedlicher Winkelablage platziert. Für jede Prüfkörperposition werden separat Messdaten, also die Signale des oder der Umfeldsensoren aufgenommen.

Dabei steht das Kraftfahrzeug in der Regel in einer eingemessenen Position und Ausrichtung auf einer großen Freifläche, der sogenannten Prüffläche. Die Prüfkörper werden manuell an vordefinierten Punkten eines Gitterrasters platziert, wobei eine Vorzugsachse des Umfeldsensors bezüglich der Gitterpunkte eine definierte Ausrichtung aufweist. In den meisten Fällen befindet sich innerhalb des Sensorsichtfeldes jeweils nur ein einziger Prüfkörper, es kann jedoch zur Ermittlung der Trennfähigkeit auch sinnvoll sein, mehrere Prüfkörper gleichzeitig in bestimmten Abständen und in bestimmten Winkelablagen zu platzieren. Die für die Tests benötigte Prüffläche orientiert sich an der Reichweite und am horizontalen Öffnungswinkel der zu untersuchenden Umfeldsensoren. Bei großen Reichweiten ergibt sich somit eine erhebliche Wegstrecke für das Personal, das die Prüfkörper an den Gitterpunkten anordnet.

Diese Vorgehensweise des Standes der Technik ist in vielerlei Hinsicht nachteilhaft. Zum einen erfordert die manuelle Platzierung der Prüfkörper die Aufbringung eines Gitterrasters auf der Prüffläche in Form von Markierungspunkten, Linien oder dergleichen. Falls keine Markierungen vorhanden sind, können die Prüfkörper alternativ auch mit Hilfe von GPS, differentiellen GPS oder anderen elektronischen oder optischen Positioniersystemen platziert werden. In diesem Fall müssen allerdings auch die Fahrzeugposition und die Fahrzeugachsenausrichtung, mithin auch die Achsenausrichtung des wenigstens einen Umfeldsensors, in GPS-Koordinaten bekannt sein. Falls eine Charakterisierung der Umfeldsensorik mit hoher Auflösung an Gitterpunkten benötigt wird, ist eine manuelle Platzierung von Prüfkörpern mit erheblichem Arbeits- und Zeitaufwand verbunden.

Falls beispielsweise optische Sensorsysteme bei unterschiedlichem Sonnenstand charakterisiert werden sollen (beispielsweise Gegenlicht, seitliches Licht, Licht von hinten), muss die Ausrichtung der Fahrzeugachse und die Ausrichtung des Gitterrasters an die jeweils gewünschten Messbedingungen angepasst werden. Damit wird eine Vielfalt von Gitterrastern erforderlich, die in unterschiedlichen Himmelsrichtungen ausgerichtet sein müssen.

EP 1 818 748 A2 betrifft eine Vorrichtung für die Prüfung und Einstellung von Fahrerassistenzsystemen von Kraftfahrzeugen am Bandende. Dabei sollen Umfeldsensoren, beispielsweise Infrarot- oder Radarsensorik, am Bandende kalibriert werden. Das Kraftfahrzeug wird in einem Gehänge gefördert und es sind Mittel zum Positionieren und Fixieren des Gehängesystems vorgesehen. Ebenfalls zur dortigen Erfindung ist gehört, dass die Kalibrierziele positionierbar, insbesondere verfahrbar und/oder verschwenkbar sind.

Der Erfindung liegt daher die Aufgabe zugrunde, ein Verfahren und eine Anordnung zur Erprobung und/oder Funktionsprüfung der Umfeldsensorik anzugeben, das diese Nachteile vermeidet und insbesondere aufwandsärmer und automatisierbar durchgeführt werden kann.

Zur Lösung dieses Problems ist bei einem Verfahren der eingangs genannten Art erfindungsgemäß vorgesehen, dass das Kraftfahrzeug auf eine fahrbare Trägerplattform aufgebracht und auf der Trägerplattform in die definierte Position und Ausrichtung bewegt wird.

Es wird also das Dogma, dass es die Prüfkörper sind, die bezüglich des Kraftfahrzeugs verschoben werden müssen, erfindungsgemäß überwunden und stattdessen vorgeschlagen, das Kraftfahrzeug als das zu bewegende Objekt anzusehen. Es wird also in verschiedene zu vermessende Positionen und Ausrichtungen gebracht. Relevant ist dabei die relative Position zwischen Kraftfahrzeug und Prüfkörper. Durch die definierte Ausrichtung der Kraftfahrzeugachse folgt auch eine definierte Ausrichtung der Achsen des oder der Umfeldsensoren.

Dieser Ansatz, die Umfeldsensorik relativ zu dem oder den Prüfkörpern zu bewegen, hat neben seiner Flexibilität eine Vielzahl weiterer Vorteile. Zum einen entfällt die aufwendige manuelle Positionierung der Prüfkörper auf einer ausgedehnten Prüffläche. Weiterhin kann, wie im Folgenden noch näher dargelegt wird, auf einfache Weise eine Automatisierung der Erprobung und/oder Überprüfung erreicht werden. So werden auch Messungen auf einem dichten Gitternetz möglich, ohne dass der erforderliche Aufwand unzumutbare Ausmaße annimmt. Dies ermöglicht eine präzise Bestimmung der räumlichen Auflösung unterschiedlichster Umfeldsensoren. Auch können die Charakteristiken von Umfeldsensoren mit unterschiedlichen Vorzugsrichtungen, die alle in einem einzigen Fahrzeug verbaut sind (beispielsweise Frontsensoren, Hecksensoren oder Seitensensoren) mit geringem Aufwand nahezu gleichzeitig vermessen werden, da hierzu lediglich das Kraftfahrzeug gegebenenfalls geringfügig umpositioniert und gedreht werden muss. So kann die Rundum-Charakteristik von Umfeldsensorik in einfacher Weise ermittelt werden.

Gleichzeitig ist aber auch eine effiziente Charakterisierung insbesondere optischer Umfeldsensoren bei unterschiedlichem Sonnenstand effizient möglich, indem bei gleichbleibender, vorgebbarer Relativposition von Kraftfahrzeug und Prüfkörper die Fahrzeugpositionierung relativ zum Sonnenstand in einfacher Weise verändert werden kann. Bei feststehendem Prüfkörper werden lediglich die Fahrzeugposition und die Fahrzeugachsenausrichtung auf die gewünschten Lichtverhältnisse angepasst.

Auf diese Weise wird schließlich der Zeitbedarf für die Sensorcharakterisierung erheblich verringert.

Mit besonderem Vorteil ist dabei vorgesehen, dass das Kraftfahrzeug auf eine fahrbare Trägerplattform aufgebracht und auf der Trägerplattform in die definierte Position und Ausrichtung bewegt wird. Die Trägerplattform, die beispielsweise vier Räder aufweisen kann, weist dabei eine Aufnahme für das Kraftfahrzeug mit der zu testenden Umfeldsensorik auf, so dass dieses bezüglich der Trägerplattform definiert positioniert oder positionierbar ist. Gegebenenfalls können, um diese Positionierung zu optimieren, Positionierungsmittel auf der Trägerplattform vorgesehen sein. Die Trägerplattform ist dabei so ausgestaltet, dass eine möglichst schnelle und einfache Positionierung und Ausrichtung des Kraftfahrzeugs erfolgen kann. Eine exakte Positionierung durch die Eigenbewegung des Kraftfahrzeugs selber wäre weitaus komplizierter, so dass die Verwendung einer fahrbaren Trägerplattform eine weitere Vereinfachung und Verbesserung darstellt.

Dabei kann insbesondere im Hinblick auf eine Automatisierung und/oder Arbeitsverringerung zweckmäßigerweise eine Trägerplattform mit einem eigenen Antrieb und einem eigenen Lenksystem verwendet werden. Dann ist es nämlich mit besonderem Vorteil möglich, dass die Trägerplattform aufgrund einer Bestimmung ihrer aktuellen Position und Ausrichtung bezüglich des Prüfkörpers automatisch in eine Zielposition und Zielausrichtung verfahren wird. Roboterartig bewegt somit die fahrbare Trägerplattform das Kraftfahrzeug zu den gewünschten Messkoordinaten und erreicht dabei auch die zur Vermessung vorgesehene Ausrichtung. Manuelle Tätigkeiten zur Herstellung der Messgeometrie sind somit überhaupt nicht mehr notwendig, zudem erlaubt die automatische Positionierung und Ausrichtung eine exaktere Herstellung der relativen Position von Kraftfahrzeug und Prüfkörper und somit Umfeldsensor und Prüfkörper. Da häufig Messdaten für verschiedene relative Positionen und Ausrichtungen von Umfeldsensor und Prüfkörper aufgenommen werden sollen, kann insbesondere auch vorgesehen sein, dass während des Prüfvorganges die Trägerplattform automatisch verschiedene Zielpositionen und/oder -ausrichtungen anfährt, an welchen Zielpositionen und/oder -ausrichtungen jeweils Messdaten aufgenommen werden. Um die Automatisierung zu perfektionieren, kann zweckmäßigerweise nach Erreichen einer Zielposition und - ausrichtung die Trägerplattform und/oder eine mit der Trägerplattform kommunizierende Leiteinrichtung ein Triggersignal zum Beginnen der Messdatenaufnahme an das Kraftfahrzeug und/oder ein im Kraftfahrzeug angeordnetes Testgerät übermitteln. Auf diese Weise wird also auch der Start der Messung nach Erreichen der Zielposition und -ausrichtung vollautomatisch gestartet, so dass ganze Erprobungs- und/oder Funktionsprüfungsabläufe vollautomatisiert durchgeführt werden können. Bezüglich dieser Vollautomatisierung, jedoch nicht nur in diesem Fall, ist es grundsätzlich sinnvoll, eine zentrale Leiteinrichtung vorzusehen. Diese kann ein Teil der Trägerplattform sein, jedoch auch, beispielsweise in einem Leitstand, extern untergebracht sein und mit der Trägerplattform bzw. deren Steuereinrichtung und/oder mit den für die Messung zuständigen Komponenten im Kraftfahrzeug in Kommunikationsverbindung stehen. Während Kraftfahrzeuge vorgeschlagen wurden, bei denen eine Testfunktionalität für die Umfeldsensorik bereits in die Kraftfahrzeugelektronik integriert ist, kann genauso vorgesehen sein, ein beispielsweise an den CAN-Bus eines Kraftfahrzeuges anschließbares Testgerät zu verwenden, welches die Messung leitet und die Messdaten aufnimmt. Je nachdem stehen entweder das Kraftfahrzeug oder das Testgerät in Kommunikationsverbindung mit der Leiteinrichtung, die Teil der Trägerplattform oder mit dieser kommunizierend sein kann.

Um das Aufbringen eines oder mehrerer Gitterraster auf der Prüffläche zu vermeiden, ist es grundsätzlich sinnvoll, die Position und Ausrichtung des Kraftfahrzeugs bzw. der Trägerplattform automatisch über ein dediziertes System zu bestimmen. So kann vorgesehen sein, dass eine mit einem Positionsbestimmungssystem, insbesondere einem Funkortungssystem und/oder einem differentiellen GPS-System und/oder einem die Position und/oder Ausrichtung anhand in die Prüffläche eingelassener Elemente bestimmenden System und/oder einem optischen Orientierungssystem, ausgestattete Trägerplattform zu verwenden. Analog kann auch ein Kraftfahrzeug mit einem solchen Positionsbestimmungssystem vorgesehen sein. Funkortungssysteme, die beispielsweise auf einer bestimmten Anordnung von Transpondern und Sendern beruhen und aufgrund von Signalstärken und/oder auch Signalrichtungen die Position bestimmen, sind allgemein bekannt. Insbesondere kann vorgesehen sein, dass an den Prüfkörpern selber Transponder und/oder Empfänger vorgesehen sind, so dass unmittelbar die relative Position des Kraftfahrzeugs zu dem oder den Prüfkörpern ermittelt werden kann. Auch ein differentielles GPS-System bietet sich als Positionsbestimmungssystem an. Bei einem differentiellen GPS-System wird die beim normalen, lediglich auf Satelliten basierenden GPS vorhandene, eher grobe Auflösung durch zusätzliches Vorsehen einer Basisstation auf dem Testgelände, insbesondere auch auf der Prüffläche, verbessert. Auf diese Weise sind Auflösungen bis hin in den Zentimeterbereich möglich. Weiterhin sind auch Systeme denkbar, die die Position und die Ausrichtung anhand in die Prüffläche eingelassener Elemente bestimmen. Solche Elemente können beispielsweise Magnete, Induktionsschleifen oder dergleichen sein, bei denen letztlich das Messgitter in der Prüffläche versenkt wird. Schließlich sind selbstverständlich auch optische Orientierungssysteme denkbar, beispielsweise solche mit Kameras. Eine genaue Positionsbestimmung auf die genannten Arten ist für das Erhalten qualitativ hochwertiger Messdaten von Vorteil und erleichtert insbesondere auch, falls vorgesehen, eine automatische Positionierung.

Mit besonderem Vorteil kann vorgesehen sein, dass das Kraftfahrzeug wenigstens zum Zeitpunkt der Messdatenaufnahme möglichst bodennah gelagert ist. Dafür sind im Wesentlichen zwei Möglichkeiten denkbar, zum einen, dass das Kraftfahrzeug auf der Trägerplattform grundsätzlich bodennah gelagert ist, insbesondere einer Höhe < 10 cm, bevorzugt < 5 cm. Dabei wird das Kraftfahrzeug also grundsätzlich knapp über dem Boden transportiert. Gleichermaßen oder gar zusätzlich ist es denkbar, dass das Kraftfahrzeug bei Erreichen einer zur Messung bestimmten Position und Ausrichtung automatisch auf Bodenhöhe abgesenkt wird. Beispielsweise kann der kraftfahrzeugtragende Teil der Trägerplattform, beispielsweise über hydraulische Aktuatoren, auf der Fahrbahn abgestellt werden, so dass das Kraftfahrzeug fast selbst auf dem Boden steht. Auf diese Weise wird erreicht, dass die Messbedingungen möglichst realistisch sind und keine im Realbetrieb nicht existierende Höhe des oder der Umfeldsensoren bei der Messung vorliegt.

Ist eine solche bodennahe Lagerung des Kraftfahrzeugs vorgesehen, so kann mit besonderem Vorteil eine zweigeteilte Trägerplattform verwendet werden, auf deren einem Teil das Kraftfahrzeug gelagert wird und deren anderer Teil eine Antriebs- und/oder Steuereinheit umfasst. In der Antriebs- und/oder Steuereinheit können beispielsweise der Antrieb der Trägerplattform, sein Lenksystem sowie eine Steuereinrichtung und auch eine Datenkommunikationseinrichtung verbaut sein, also aufbauende Teile, die eine höhere Lagerung des Kraftfahrzeugs erfordert hätten. Die beiden Teile der Trägerplattform sind selbstverständlich fest verbunden.

Besonders zweckmäßig ist es auch, wenn eine Trägerplattform mit allseitig drehbaren Rädern verwendet wird. Auf diese Weise ist es besonders einfach möglich, schnell und genau ein Kraftfahrzeug zu positionieren. Insbesondere vier Räder eignen sich für diese Zwecke, von denen entweder alle vier gleichzeitig allseitig drehbar sind oder jeweils die Vorder- und Hinterräder unabhängig, um die Ausrichtung zu verändern. Beliebige Ausgestaltungen sind hier möglich, um eine möglichst exakte Positionierung und Ausrichtung möglichst einfach zu erreichen.

Um die Ausrichtung des Kraftfahrzeugs möglichst einfach und flexibel zu gestalten, kann eine als fahrbare Drehscheibe ausgebildete Trägerplattform verwendet werden. Dies hat insbesondere bei der Verwendung einer zweiteiligen Plattform, bei der sich einseitig ja der Aufbau der Antriebs- und/oder Steuereinheit befindet, den Vorteil, dass auch nach hinten ausgerichtete Umfeldsensoren dann leicht so gedreht werden können, dass ihr Blickfeld nicht durch Teile der Trägerplattform verstellt ist. Grundsätzlich ist es natürlich auch denkbar, die Aufnahme für das Kraftfahrzeug auf der Trägerplattform so zu gestalten, dass das aufzunehmende Kraftfahrzeug in einem beliebigem Winkel abgestellt werden kann. Auch auf diese Weise kann jeweils ein freies Sichtfeld in einer vordefinierten Achsenausrichtung der Trägerplattform ermöglicht werden.

Wie bereits diskutiert, ist es besonders vorteilhaft, wenn eine vollautomatisierte Erprobung und/oder Funktionsprüfung erfolgt. Insbesondere kann dafür, wie im Zusammenhang mit dem Positionsbestimmungssystem und dem ansteuerbaren Antrieb schon diskutiert wurde, eine auf der Trägerplattform vorgesehene Steuereinrichtung und/oder eine zentrale, mit der Trägerplattform und dem Kraftfahrzeug und/oder einem in dem Kraftfahrzeug angeordneten Testgerät in Kommunikationsverbindung stehende Leiteinrichtung die Erprobung und/oder Funktionsprüfung inklusive des Anfahrens neuer Positionen und/oder Ausrichtungen steuern.

Neben dem Verfahren betrifft die vorliegende Erfindung auch eine Anordnung zur Erprobung und/oder Funktionsprüfung wenigstens eines in einem Kraftfahrzeug verbauten Umfeldsensors, die insbesondere zur Durchführung des erfindungsgemäßen Verfahrens ausgebildet sein kann. Eine solche Anordnung umfasst eine Prüffläche mit wenigstens einem darauf fest angeordneten Prüfkörper und eine auf der Prüffläche bewegbare Trägerplattform mit einer Aufnahme für ein Kraftfahrzeug. Im Unterschied zu bekannten Anordnungen sind die Prüfkörper auf der Prüffläche fest angeordnet, wohingegen das Kraftfahrzeug auf einer Trägerplattform in eine bestimmte Position und/oder Ausrichtung bezüglich des oder der Prüfkörper gebracht werden kann. Die sich ergebenden mannigfaltigen Vorteile wurden bereits bezüglich des Verfahrens diskutiert.

In Weiterbildung des Erfindungsgedankens kann vorgesehen sein, dass die Trägerplattform Positionierungsmittel für ein Kraftfahrzeug relativ zu der Trägerplattform und/oder einen eigenen Antrieb und ein eigenes Lenksystem und/oder ein Positionsbestimmungssystem, insbesondere ein Funkortungssystem und/oder ein differentielles GPS-System und/oder ein die Position und/oder Ausrichtung anhand in die Prüffläche eingelassener Elemente bestimmendes System und/oder ein optisches Orientierungssystem, und/oder eine Steuereinrichtung und/oder eine Datenkommunikationseinrichtung umfasst. Diese Komponenten ermöglichen letztendlich eine vollständige Automatisierung. Die Trägerplattform kann als fahrbare Drehscheibe ausgebildet sein, so dass eine Ausrichtung des Kraftfahrzeugs in verschiedenen Richtungen besonders einfach zu realisieren ist.

Zweckmäßigerweise kann die Trägerplattform einen niedrigen, die bodennahe und/oder auf den Boden abgesenkbare Aufnahme für das Kraftfahrzeug umfassenden ersten Teil und einen damit verbundenen zweiten Teil mit wenigstens einer Antriebs- und/oder Steuereinheit umfassen. Dadurch ist sichergestellt, dass die Montagehöhe der Umfeldsensorik durch den Test nicht beeinflusst wird. Der zweite Teil der Trägerplattform trägt die Antriebs- und/oder Steuereinheit umfassend beispielsweise den Antrieb, die Lenkeinrichtung, die Steuereinrichtung und/oder die Datenkommunikationseinrichtung oder auch ein Positionsbestimmungssystem, da diese Komponenten nur schwer unter dem aufzunehmenden Kraftfahrzeug untergebracht werden können. Beide Plattformteile sind fest miteinander verbunden.

Zur einfachen und flexiblen Positionierung und Ausrichtung des Kraftfahrzeugs kann ferner vorgesehen sein, dass die Trägerplattform allseitig drehbare Räder umfasst. Insbesondere sind vier Räder denkbar.

Die Anordnung kann in weiterer Ausgestaltung auch eine zentrale Leiteinrichtung umfassen, die in Kommunikationsverbindung mit der Trägerplattform und dem Kraftfahrzeug und/oder einem in den Kraftfahrzeug angeordneten Testgerät steht. Dann ist auch eine Steuerung der Messdatenaufnahme von außerhalb der Trägerplattform möglich.

Selbstverständlich kann die Anordnung auch Prüfkörper für verschiedene Arten von Umfeldsensoren umfassen. Diese können beispielsweise auch in unterschiedlichen Bereichen auf der Prüffläche fest angeordnet sein. Viele Ausgestaltungen sind hier denkbar.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze einer erfindungsgemäßen Anordnung,
- Fig. 2: eine andere Ausgestaltung einer Trägerplattform,
- Fig. 3: mehrere Kraftfahrzeugpositionen bezüglich eines Prüfkörpers, und
- Fig. 4: einen Ablaufplan des erfindungsgemäßen Verfahrens.

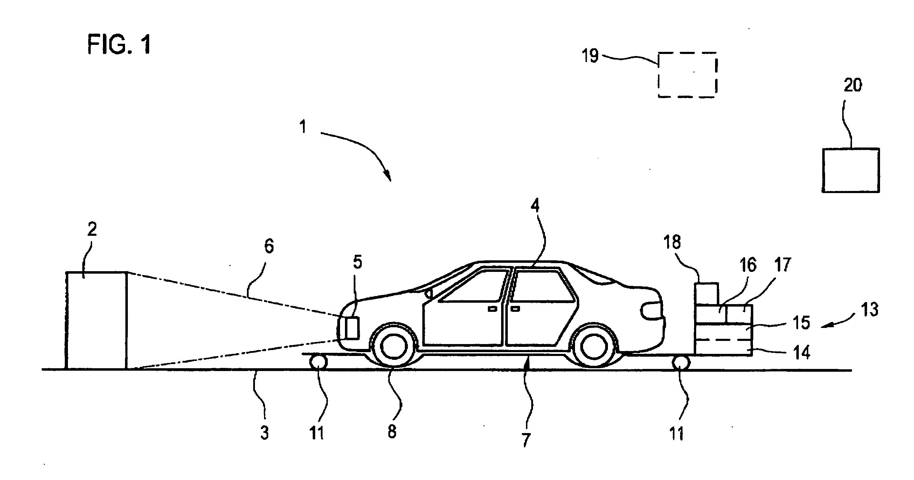

Fig. 1 zeigt in Form einer Prinzipskizze eine erfindungsgemäße Anordnung 1. Sie umfasst wenigstens einen Prüfkörper 2, der fest auf einer Prüffläche 3 angeordnet ist. Dieser Prüfkörper dient nun dazu, zu erproben bzw. zu überprüfen, welche Messdaten ein in einem Kraftfahrzeug 4 verbauter Umfeldsensor 5 mit einem Blickfeld 6 in unterschiedlichen Positionen und Orientierungen relativ zu dem Prüfkörper 2 aufnimmt. Dafür ist bei der erfindungsgemäßen Anordnung 1 vorgesehen, das Kraftfahrzeug 4 in bestimmte, zur Messdatenaufnahme vorgesehene Positionen und Ausrichtungen relativ zum Prüfkörper 2 dadurch zu verbringen, dass das Kraftfahrzeug 4 gegenüber dem feststehenden Prüfkörper 2 bewegt wird. Dafür ist eine Trägerplattform 7 vorgesehen, die eine bei 8 angedeutete Aufnahme für das Kraftfahrzeug 4 aufweist. Gegebenenfalls können auch hier nicht näher dargestellte Positioniermittel vorgesehen sein, um eine definierte Position und Ausrichtung des Kraftfahrzeugs 4 gegenüber der Trägerplattform 7 zu erreichen. So entspricht jede Position und Ausrichtung der Trägerplattform 7 einer Position und Ausrichtung des Kraftfahrzeugs 4 und somit des Umfeldsensors 5. Es sei an dieser Stelle angemerkt, dass die Umfeldsensorik des Kraftfahrzeugs 4 selbstverständlich auch mehrere Umfeldsensoren 5 umfassen kann.

Im in Fig. 1 gezeigten Ausführungsbeispiel ist die Trägerplattform 7 so ausgebildet, dass das Kraftfahrzeug 4 möglichst dicht über dem Boden, also der Prüffläche 3, gelagert ist, vorliegend in einer Höhe von etwa 4 cm. So wird die Höhe des Umfeldsensors 5 bei dem Test im Vergleich zum realen Einsatzfall kaum geändert.

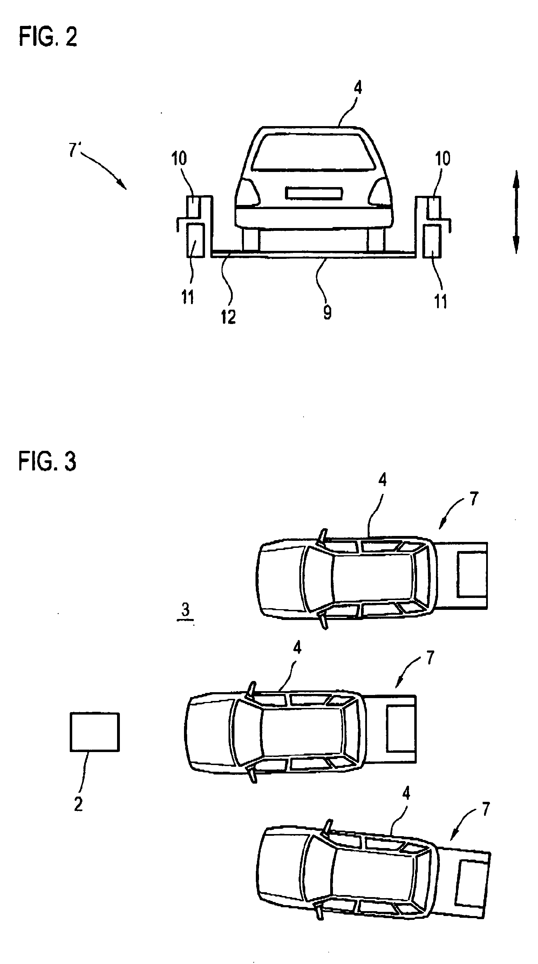

Eine weitere, dieses erreichende Ausführung einer Trägerplattform 7' zeigt die Fig. 2 in einer Prinzipskizze. Dabei ist zentral eine das Kraftfahrzeug 4 aufnehmende Plattform 9 vorgesehen, die über bei 10 angedeutete Höhenverstellmittel absenkbar ist. Die Höhenverstellmittel 10 können beispielsweise hydraulische oder pneumatische Mittel sein.

Bei entsprechender Ausgestaltung, beispielsweise bei Vorsehung der Höhenverstellmittel 10 schmalflächig lediglich auf Höhe der vier Räder 11 der Trägerplattform 7' kann insbesondere vorgesehen sein, dass das Kraftfahrzeug 4 auf einer Drehscheibe 12 gelagert ist, die die Drehung des Kraftfahrzeugs 4 bei fester Ausrichtung der Trägerplattform 7' erlaubt.

Selbstverständlich kann auch die Trägerplattform 7 als fahrbare Drehscheibe 12 ausgebildet werden.

Um die bodennahe bzw. absenkbare Lagerung des Kraftfahrzeugs 4 zu ermöglichen, ist die Trägerplattform 7 in zwei Teile aufgeteilt. Der eine Teil stellt die Aufnahme für das Kraftfahrzeug 4 bereit, und befindet sich somit knapp oberhalb der Prüffläche 3, dem Boden. Andere Bestandteile der Trägerplattform 7, die aufgrund des Raumbedarfs nicht unterhalb des Kraftfahrzeugs 4 angeordnet sein können, sind auf einem zweiten mit dem ersten Teil fest verbundenen Teil der Trägerplattform 7 als Antriebs- und Steuereinheit 13 angeordnet. Vorliegend umfasst die Trägerplattform 7 einen Antrieb 14, ein Lenksystem 15, eine Steuereinrichtung 16 sowie eine Datenkommunikationseinrichtung 17. Schließlich ist noch ein Positionsbestimmungssystem 18 vorgesehen, vorliegend ein differentielles GPS-System, das mit einer der Anordnung 1 zugeordneten, bei 19 angedeuteten Basisstation zusätzlich zu den Satelliten zusammenwirkt, um eine Positionsbestimmung bis in den Zentimeterbereich zu erlauben. Um zudem die Ausrichtung der Trägerplattform 7 ermitteln zu können, wird die Position durch das Positionsbestimmungssystem 18 an zwei Punkten auf der Trägerplattform 7 bestimmt, woraus die Ausrichtung folgt.

Es sei an dieser Stelle angemerkt, dass selbstverständlich auch das Kraftfahrzeug 4 ein Positionsbestimmungssystem umfassen kann, und, da die Position und Ausrichtung des Kraftfahrzeugs 4 bezüglich der Trägerplattform 7 bekannt ist, diese leicht in eine Position und Ausrichtung der Trägerplattform 7 umgerechnet werden kann.

Wie bereits erwähnt, dient die Trägerplattform 7 der möglichst genauen und einfachen, insbesondere automatisierten, Positionierung und Ausrichtung des Kraftfahrzeugs auf der Prüffläche 3 relativ zu dem Prüfkörper 2. Daher ist die Trägerplattform 7 so ausgebildet, dass ein möglichst einfaches und präzises Anfahren einer Zielausrichtung und einer Zielpositionierung ermöglicht wird.

Insbesondere sind die vier Räder 11 in jede Richtung drehbar, und zwar entweder alle gemeinsam oder je in Paaren zu zweien.

Dabei werden während einer Überprüfung und/oder Erprobung des wenigstens einen Umgebungssensors 5 häufig in Folge verschiedene Zielpositionen und/oder Ausrichtungen angefahren, an denen jeweils Messdaten aufgenommen werden. Beispielhaft zeigt Fig. 3 mehrere solcher Zielpositionen und -ausrichtungen an, die das Kraftfahrzeug 4 auf der Trägerplattform 7 relativ zu dem Prüfkörper 2 auf der Prüffläche 3 einnehmen kann.

Mit der Anordnung kann eine vollautomatische Erprobung und/Überprüfung des Umgebungssensors 5 erfolgen. Gesteuert wird der vollautomatische Vorgang durch eine Leiteinrichtung, die beispielsweise als die Steuereinrichtung 16 an der Trägerplattform 7 realisiert sein kann, es ist jedoch auch denkbar, eine externe, beispielsweise in einem Leitstand angeordnete Leiteinrichtung 20 zu verwenden. Diese steht dann in Kommunikationsverbindung mit der Trägerplattform 7, genauer mit deren Steuereinrichtung 16 über die Datenkommunikationseinrichtung 17 und mit dem Kraftfahrzeug 4 oder einem in dem Kraftfahrzeug 4 angeordneten Testgerät, über welches die Messdatenaufnahme erfolgt. Zur Kommunikation kann dabei beispielsweise ein WLAN-Netzwerk verwendet werden. Insbesondere sind dabei entweder die Leiteinrichtung 20 selber oder die Steuereinrichtung 16 der Trägerplattform 7 dazu ausgebildet, ein Triggersignal an das Kraftfahrzeug 4 und/oder ein im Kraftfahrzeug 4 angeordnetes Testgerät zu verwenden, um die Messdatenaufnahme zu beginnen.

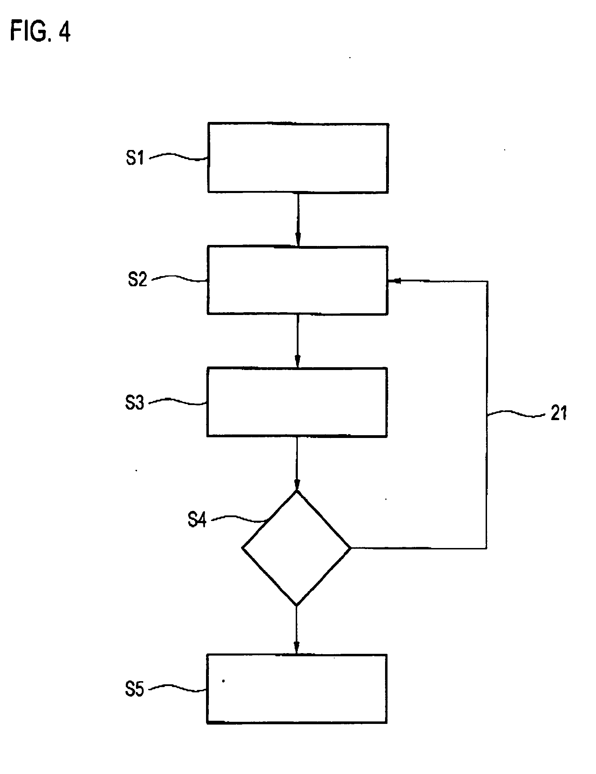

Fig. 4 zeigt schließlich einen Ablaufplan des erfindungsgemäßen Verfahrens, wie es im Wesentlichen schon im Bezug auf die Anordnung 1 beschrieben wurde.

In einem Schritt S1 ist das Kraftfahrzeug 4 auf die Trägerplattform 7 aufgebracht. Dann wird, beispielsweise an der Leiteinrichtung 20, der vollautomatische Erprobungs- und/oder Funktionsprüfungsprozess gestartet. Dazu wird zunächst in einem Schritt S2 die Trägerplattform mit dem Kraftfahrzeug 4 so verfahren, dass sich eine bestimmte Zielposition und Ausrichtung relativ zu dem wenigstens einen Prüfkörper 2 ergibt. Dies ist besonders einfach aufgrund der Verwendung des Positionsbestimmungssystems 18 und der festen Position der Prüfkörper 2 möglich. Ist die Zielposition und -ausrichtung erreicht, so wird in einem Schritt S3 ein Triggersignal an das Kraftfahrzeug 4 bzw. ein in dem Kraftfahrzeug 4 vorhandenes Testgerät gesendet, um die Messdatenaufnahme zu beginnen. Ist diese abgeschlossen, wird in einem Schritt S4 überprüft, ob weitere Zielpositionen und -ausrichtungen angefahren werden sollen. Ist dies der Fall, so werden diese erneut in Schritt S2 angefahren, Pfeil 21. Sind alle Messdaten aufgenommen, so wird das Verfahren in Schritt S5 beendet.

## Patentansprüche

1. Verfahren zur Erprobung und/oder Funktionsprüfung wenigstens eines in einem Kraftfahrzeug (4) verbauten Umfeldsensors (5), bei dem Messdaten betreffend wenigstens einen bezüglich des Kraftfahrzeugs definiert positionierten und ausgerichteten Prüfkörper (2) aufgenommen werden, wobei zur definierten Positionierung und Ausrichtung des Kraftfahrzeugs (4) relativ zu dem feststehenden Prüfkörper (2) as Kraftfahrzeug in eine definierte Position verbracht und die Kraftfahrzeugachse definiert ausgerichtet wird,
**dadurch gekennzeichnet,**
**dass** das Kraftfahrzeug (4) auf eine fahrbare Trägerplattform (7,7') aufgebracht und auf der Trägerplattform in die definierte Position und Ausrichtung bewegt wird.

2. Verfahren nach Anspruch 1,
**dadurch gekennzeichnet,**
**dass** eine Trägerplattform (7,7') mit einem eigenen Antrieb (14) und einem eigenen Lenksystem (15) verwendet wird.

3. Verfahren nach Anspruch 2,
**dadurch gekennzeichnet,**
**dass** die Trägerplattform (7,7') aufgrund einer Bestimmung ihrer aktuellen Position und Ausrichtung bezüglich des Prüfkörpers (2) automatisch in eine Zielposition und Zielausrichtung verfahren wird.

4. Verfahren nach Anspruch 3,
**dadurch gekennzeichnet,**
**dass** während des Prüfvorganges die Trägerplattform (7,7') automatisch verschiedene Zielpositionen und/oder -ausrichtungen anfährt, an welchen Zielpositionen und/oder -ausrichtungen jeweils Messdaten aufgenommen werden.

5. Verfahren nach Anspruch 3 oder 4,
**dadurch gekennzeichnet,**
**dass** nach Erreichen einer Zielposition und -ausrichtung die Trägerplattform (7,7') und/oder eine mit der Trägerplattform kommunizierende Leiteinrichtung (20) ein Triggersignal zum Beginnen der Messdatenaufnahme an das Kraftfahrzeug (4) und/oder ein im Kraftfahrzeug angeordnetes Testgerät übermittelt.

6. Verfahren nach einem der vorangehenden Ansprüche,
**dadurch gekennzeichnet,**
**dass** eine mit einem Positionsbestimmungssystem (18), insbesondere einem Funkortungssystem und/oder einem differentiellen GPS-System und/oder einem die Position und/oder Ausrichtung anhand in die Prüffläche (3) eingelassener Elemente bestimmenden System und/oder einem optischen Orientierungssystem, ausgestattete Trägerplattform (7) verwendet wird.

7. Verfahren nach einem der vorangehenden Ansprüche,
**dadurch gekennzeichnet**
**dass** ein Kraftfahrzeug (4) mit einem Positionsbestimmungssystem, insbesondere einem Funkortungssystem und/oder einem differentiellen GPS-System, verwendet wird.

8. Verfahren nach einem der vorangehenden Ansprüche,
**dadurch gekennzeichnet,**
**dass** das Kraftfahrzeug (4) auf der Trägerplattform bodennah gelagert ist, insbesondere in einer Höhe kleiner als 10 cm, bevorzugt kleiner als 5 cm.

9. Verfahren nach einem der vorangehenden Ansprüche,
**dadurch gekennzeichnet,**
**dass** das Kraftfahrzeug (4) bei Erreichen einer zur Messung bestimmten Position und Ausrichtung automatisch auf Bodenhöhe abgesenkt wird.

10. Verfahren nach Anspruch 8 oder 9,
**dadurch gekennzeichnet,**
**dass** eine zweigeteilte Trägerplattform (7) verwendet wird, auf deren einem Teil das Kraftfahrzeug (4) gelagert wird und deren anderer Teil eine Antriebs- und/oder Steuereinheit (13) umfasst.

11. Verfahren nach einem der vorangehenden Ansprüche,
**dadurch gekennzeichnet,**
**dass** eine Trägerplattform (7,7') mit allseitig drehbaren Rädern (11) verwendet wird.

12. Verfahren nach einem der vorangehenden Ansprüche,
**dadurch gekennzeichnet,**
**dass** eine als fahrbare Drehscheibe (12) ausbildete Trägerplattform (7,7') verwendet wird.

13. Verfahren nach einem der vorangehenden Ansprüche,
**dadurch gekennzeichnet,**
**dass** eine vollautomatisierte Erprobung und/oder Funktionsprüfung erfolgt.

14. Verfahren nach einem der vorangehenden Ansprüche,
**dadurch gekennzeichnet,**
**dass** eine auf der Trägerplattform (7,7') vorgesehene Steuereinrichtung (13) und/oder eine zentrale, mit der Trägerplattform und dem Kraftfahrzeug (4) und/oder einem in dem Kraftfahrzeug angeordneten Testgerät in Kommunikationsverbindung stehende Leiteinrichtung (20) die Erprobung und/oder Funktionsprüfung inklusive des Anfahrens neuer Positionen und/oder Ausrichtungen steuert.

15. Anordnung (1) zur Erprobung und/oder Funktionsprüfung wenigstens eines in einem Kraftfahrzeug (4) verbauten Umfeldsensors (5), umfassend eine Prüffläche (3) mit wenigstens einem darauf fest angeordneten Prüfkörper (2)
**dadurch gekennzeichnet,**
**dass** sie ferner eine auf der Prüffläche (3) bewegbare Trägerplattform (7, 7') mit einer Aufnahme (8) für ein Kraftfahrzeug (3) aufweist.

16. Anordnung nach Anspruch 15,
**dadurch gekennzeichnet,**
**dass** die Trägerplattform (7, 7') Positionierungsmittel für ein Kraftfahrzeug relativ zu der Trägerplattform (7, 7') und/oder einen eigenen Antrieb (14) und ein eigenes Lenksystem (15) und/oder ein Positionsbestimmungssystem (18), insbesondere ein Funkortungssystem und/oder ein differentielles GPS-System und/oder ein die Position und/oder Ausrichtung anhand in die Prüffläche eingelassener Elemente bestimmendes System und/oder ein optisches Orientierungssystem, und/oder eine Steuereinrichtung (16) und/oder eine Datenkommunikationseinrichtung (17) umfasst.

17. Anordnung nach Anspruch 15 oder 16,
**dadurch gekennzeichnet,**
**dass** die Trägerplattform (7, 7') als fahrbare Drehscheibe (12) ausgebildet ist.

18. Anordnung nach einem der Ansprüche 15 bis 17,
**dadurch gekennzeichnet,**
**dass** die Trägerplattform (7, 7') einen niedrigen, die bodennahe und/oder auf den Boden absenkbare Aufnahme (8) für das Kraftfahrzeug (4) umfassenden ersten Teil und einen damit fest verbundenen zweiten Teil mit einer Antriebs- und/oder Steuereinheit (13) umfasst.

19. Anordnung nach einem der Ansprüche 15 bis 18,
**dadurch gekennzeichnet,**
**dass** die Trägerplattform (7, 7') allseitig drehbare Räder (11) umfasst.

20. Anordnung nach einem der Ansprüche 15 bis 19,
**dadurch gekennzeichnet,**
**dass** sie ferner eine zentrale Leiteinrichtung (20) umfasst, die in Kommunikationsverbindung mit der Trägerplattform (7, 7') und dem Kraftfahrzeug (4) und/oder einem in dem Kraftfahrzeug (4) angeordneten Testgerät steht.

21. Anordnung nach einem der Ansprüche 15 bis 20, ausgebildet zur Durchführung des Verfahrens nach einem der Ansprüche 1 bis 14.

## Claims

1. Method for the trialling and/or functional testing of at least one environment sensor (5) installed in a motor vehicle (4), in which measurement data relating to at least one test body (2) positioned and oriented in a defined manner in relation to the motor vehicle are recorded, the motor vehicle being brought into a defined position and the motor vehicle axis being oriented in a defined manner for defined position and orientation of the motor vehicle (4) relative to the stationary test body (2), **characterised in that** the motor vehicle (4) is placed on a movable carrier platform (7, 7') and is moved into the defined position and orientation on the carrier platform.

2. Method according to claim 1, **characterised in that** a carrier platform (7, 7') comprising its own drive (14) and its own steering system (15) is used.

3. Method according to claim 2, **characterised in that** the carrier platform (7, 7') is moved automatically into a target position and target orientation on the basis of a determination of its current position and orientation in relation to the test body (2).

4. Method according to claim 3, **characterised in that**, during the test procedure, the carrier platform (7, 7') automatically moves towards different target positions and/or target orientations, at each of which target positions and/or target orientations measurement data are recorded.

5. Method according to either claim 3 or claim 4, **characterised in that**, once a target position and target orientation has been reached, the carrier platform (7, 7') and/or a guidance apparatus (20) communicating with the carrier platform transmits a trigger signal at the start of the measurement data recording to the motor vehicle (4) and/or a test device arranged in the motor vehicle.

6. Method according to any of the preceding claims, **characterised in that** a carrier platform (7) equipped with a position determination system (18), in particular a radiolocation system and/or a differential GPS system and/or a system determining the position and/or orientation by means of elements inserted into the test surface (3) and/or an optical orientation system, is used.

7. Method according to any of the preceding claims, **characterised in that** a motor vehicle (4) comprising a position determination system, in particular a radiolocation system and/or a differential GPS system, is used.

8. Method according to any of the preceding claims, **characterised in that** the motor vehicle (4) is mounted close to the ground on the carrier platform, in particular at a height of less than 10 cm, preferably less than 5 cm.

9. Method according to any of the preceding claims, **characterised in that** the motor vehicle (4) is lowered to ground level automatically when a position and orientation determined for measuring are reached.

10. Method according to either claim 8 or claim 9, **characterised in that** a two-part carrier platform (7) is used, on one part of which the motor vehicle (4) is mounted and the other part of which comprises a drive and/or control unit (13).

11. Method according to any of the preceding claims, **characterised in that** a carrier platform (7, 7') comprising rotatable wheels (11) on all sides is used.

12. Method according to any of the preceding claims, **characterised in that** a carrier platform (7, 7') designed as a movable turntable (12) is used.

13. Method according to any of the preceding claims, **characterised in that** a fully automated trial and/or functional test takes place.

14. Method according to any of the preceding claims, **characterised in that** a control apparatus (13) provided on the carrier platform (7, 7') and/or a central guidance apparatus (20) in communication with the carrier platform and with the motor vehicle (4) and/or with a test device arranged in the motor vehicle controls the trial and/or functional test, including the movement towards new positions and/or orientations.

15. Arrangement (1) for the trialling and/or functional testing of at least one environment sensor (5) installed in a motor vehicle (4), comprising a test surface (3) having at least one test body (2) arranged rigidly thereon, **characterised in that** it further comprises a carrier platform (7, 7') which can be moved on the test surface (3) and comprises a seat (8) for a motor vehicle (4).

16. Arrangement according to claim 15, **characterised in that** the carrier platform (7, 7') comprises means for positioning a motor vehicle relative to the carrier platform (7, 7') and/or its own drive (14) and its own steering system (15) and/or a position determination system (18), in particular a radiolocation system and/or a differential GPS system and/or a system determining the position and/or orientation by means of elements inserted into the test surface and/or an optical orientation system, and/or a control apparatus (16) and/or a data communication apparatus (17).

17. Arrangement according to either claim 15 or claim 16, **characterised in that** the carrier platform (7, 7') is designed as a movable turntable (12).

18. Arrangement according to any of claims 15 to 17, **characterised in that** the carrier platform (7, 7') comprises a low first part comprising the seat (8) for the motor vehicle (4), which seat is close to the ground and/or can be lowered to the ground, and a second part which is rigidly connected to the first part and comprises a drive and/or control unit (13).

19. Arrangement according to any of claims 15 to 18, **characterised in that** the carrier platform (7, 7') comprises rotatable wheels (11) on all sides.

20. Arrangement according to any of claims 15 to 19, **characterised in that** it further comprises a central guidance apparatus (20) which is in communication with the carrier platform (7, 7') and with the motor vehicle (4) and/or with a test device arranged in the motor vehicle (4).

21. Arrangement according to any of claims 15 to 20, designed to carry out the method according to any of claims 1 to 14.

## Revendications

1. Procédé de test et/ou de vérification de fonctionnement d'au moins un capteur d'environnement (5) intégré dans un véhicule automobile (4), selon lequel on enregistre des données de mesure concernant au moins un objet de test (2) positionné et orienté de manière définie par rapport au véhicule automobile, le véhicule automobile étant amené dans une position définie et l'axe du véhicule automobile étant orienté de manière définie pour avoir une position et une orientation définies du véhicule automobile (4) par rapport à l'objet de test (2) immobile,
**caractérisé en ce que** l'on met le véhicule automobile (4) sur une plateforme porteuse déplaçable (7, 7') et on le déplace sur la plateforme porteuse dans la position et l'orientation définies.

2. Procédé selon la revendication 1, **caractérisé en ce que** l'on utilise une plateforme porteuse (7, 7') ayant son moteur propre (14) et son système de direction propre (15).

3. Procédé selon la revendication 2, **caractérisé en ce que** l'on déplace automatiquement dans une position cible et dans une orientation cible la plateforme porteuse (7, 7') en fonction d'une détermination de sa position et de son orientation actuelles par rapport à l'objet de test (2).

4. Procédé selon la revendication 3, **caractérisé en ce que**, pendant l'opération de test, on amène la plateforme porteuse (7, 7') automatiquement dans différentes positions cibles et/ou dans différentes orientations cibles, des données de mesure étant enregistrées à chaque fois dans lesdites positions cibles et orientations cibles.

5. Procédé selon la revendication 3 ou 4, **caractérisé en ce que**, après avoir atteint une position cible et une orientation cible, la plateforme porteuse (7, 7') et/ou un dispositif de commande (20) communiquant avec la plateforme porteuse transmettent un signal de déclenchement pour commencer l'enregistrement de données de mesure sur le véhicule automobile (4) et/ou sur un appareil de test placé dans le véhicule automobile.

6. Procédé selon l'une des revendications précédentes, **caractérisé en ce que** l'on utilise une plateforme porteuse (7) équipée d'un système de détermination de position (18), notamment d'un système de localisation par radio et/ou d'un système GPS différentiel et/ou d'un système déterminant la position et/ou l'orientation à l'aide d'éléments encastrés dans la surface de test (3) et/ou d'un système d'orientation optique.

7. Procédé selon l'une des revendications précédentes, **caractérisé en ce que** l'on utilise un véhicule automobile (4) ayant un système de détermination de position, notamment un système de localisation par radio et/ou un système GPS différentiel.

8. Procédé selon l'une des revendications précédentes, **caractérisé en ce que** le véhicule automobile (4) est placé près du sol sur la plateforme porteuse, notamment à une hauteur inférieure à 10 cm, de préférence à une hauteur inférieure à 5 cm.

9. Procédé selon l'une des revendications précédentes, **caractérisé en ce que**, lorsqu'il atteint une position et une orientation déterminées pour la mesure, le véhicule automobile (4) est automatiquement abaissé à la hauteur du sol.

10. Procédé selon la revendication 8 ou 9, **caractérisé en ce que** l'on utilise une plateforme porteuse (7) en deux parties, le véhicule automobile (4) étant placé sur une partie et l'autre partie comprenant une unité motrice et/ou de commande (13).

11. Procédé selon l'une des revendications précédentes, **caractérisé en ce que** l'on utilise une plateforme porteuse (7, 7') ayant des roues (11) pouvant tourner dans toutes les directions.

12. Procédé selon l'une des revendications précédentes, **caractérisé en ce que** l'on utilise une plateforme porteuse (7, 7') conçue comme une plaque tournante déplaçable (12).

13. Procédé selon l'une des revendications précédentes, **caractérisé en ce que** l'on effectue un test et/ou une vérification de fonctionnement entièrement automatisés.

14. Procédé selon l'une des revendications précédentes, **caractérisé en ce qu'**un dispositif de commande (13) prévu sur la plateforme porteuse (7, 7') et/ou un dispositif de commande central (20) en liaison de communication avec la plateforme porteuse et le véhicule automobile (4) et/ou avec un appareil de test placé dans le véhicule automobile commandent le test et/ou la vérification de fonctionnement y compris le placement dans de nouvelles positions et/ou orientations.

15. Dispositif (1) pour le test et/ou la vérification de fonctionnement d'au moins un capteur d'environnement (5) intégré dans un véhicule automobile (4), comprenant une surface de test (3) avec au moins un objet de test (2) placé de manière fixe sur celle-ci,
**caractérisé en ce qu'**il comporte en outre une plateforme porteuse (7, 7') mobile sur la surface de test (3) et munie d'un emplacement (8) recevant un véhicule automobile (4).

16. Dispositif selon la revendication 15, **caractérisé en ce que** la plateforme porteuse (7, 7') comprend des moyens de positionnement pour un véhicule automobile par rapport à la plateforme porteuse (7, 7') et/ou un moteur propre (14) et un système de direction propre (15) et/ou un système de détermination de position (18), notamment un système de localisation par radio et/ou un système GPS différentiel et/ou un système déterminant la position et/ou l'orientation à l'aide d'éléments encastrés dans la surface de test et/ou un système d'orientation optique, et/ou un dispositif de commande (16) et/ou un dispositif de communication de données (17).

17. Dispositif selon la revendication 15 ou 16, **caractérisé en ce que** la plateforme porteuse (7, 7') est conçue comme une plaque tournante déplaçable (12).

18. Dispositif selon l'une des revendications 15 à 17, **caractérisé en ce que** la plateforme porteuse (7, 7') comprend une première partie comprenant un emplacement (8) qui peut recevoir le véhicule automobile (4) et qui peut être abaissé près du sol et/ou sur le sol et une deuxième partie qui est assemblée de manière fixe à la première et qui a une unité motrice et/ou de commande (13).

19. Dispositif selon l'une des revendications 15 à 18, **caractérisé en ce que** la plateforme porteuse (7, 7') comprend des roues (11) pouvant tourner dans toutes les directions.

20. Dispositif selon l'une des revendications 15 à 19, **caractérisé en ce qu'**il comprend en outre un dispositif de commande central (20) qui est en liaison de communication avec la plateforme porteuse (7, 7') et avec le véhicule automobile (4) et/ou avec un appareil de test placé dans le véhicule automobile (4).

21. Dispositif selon l'une des revendications 15 à 20, conçu pour la mise en oeuvre du procédé selon l'une des revendications 1 à 14.
